# EUROPÄISCHE PATENTSCHRIFT

(11) **EP 2 535 116 B1**
(45) Veröffentlichungstag und Bekanntmachung des Hinweises auf die Patenterteilung: **06.04.2016**
(21) Anmeldenummer: 11169978.1
(22) Anmeldetag: 15.06.2011
(51) Int. Cl.: B03D 1/14

(54) **System und Verfahren zur Überwachung eines Zustandes mindestens einer Düse**
Method and system for monitoring the condition of at least one nozzle
Système et procédé de surveillance de l'état d'au moins une douille

(43) Veröffentlichungstag der Anmeldung: 19.12.2012
(73) Patentinhaber: Primetals Technologies Germany GmbH, 91052 Erlangen (DE)
(72) Erfinder: Blendinger, Stefan, 90762 Fürth (DE); Fleck, Robert, 91325 Adelsdorf (DE); Franke, Gerold, 90409 Nürnberg (DE); Grossmann, Lilla, 91058 Erlangen (DE); Hartmann, Werner, 91085 Weisendorf (DE)
(74) Vertreter: Metals@Linz

(56) Entgegenhaltungen:
- DE-A1- 19 835 434
- US-A- 4 804 460

## Beschreibung

Die Erfindung betrifft ein System und ein Verfahren zur Überwachung eines Zustandes mindestens einer Düse zum Verdüsen eines Zwei- oder Dreiphasengemisches.

Siehe hierzu DE 198 35 434 als nächster Stand der Technik.

Düsen zum Verdüsen oder Einbringen von Stoffgemischen umfassend Stoffe unterschiedlichen Aggregatzustands in Prozesskammern oder -räume sind in den unterschiedlichsten Industriezweigen hinreichend bekannt. So werden beispielsweise Düsen eingesetzt, um Zweistoffgemische umfassend Gas und Feststoffpartikel oder Gas und Flüssigkeit zu verdüsen. Dies ist z.B. im Bereich der Metallherstellung bekannt, wo Kohlenstoffpartikel, Kalkpartikel usw. mit Hilfe eines Gases in einen Schmelzofen eingeblasen werden. In dieser wie auch diversen weiteren Branchen werden beispielsweise auch flüssige Brennstoffe, wie z.B. Schweröl, mit Sauerstoff enthaltenden Gasen verdüst und dann verbrannt, um Öfen zu betreiben oder sonstige Heizprozesse usw. durchzuführen. Auch das Verdüsen von Zweiphasengemischen in Form von Suspensionen umfassend Feststoffpartikel und Flüssigkeit ist aus den Bereichen der Abwassertechnik, der Schwimmbadtechnik, der Flotationstechnik zur Rohstoffaufbereitung und dergleichen bereits bekannt.

Ein Verdüsen von Dreiphasengemischen umfassend Gas, Feststoffpartikel und Flüssigkeit kommt beispielsweise ebenfalls bei der Flotation zum Einsatz.

Die Flotation ist ein physikalisches Trennverfahren zur Trennung feinkörniger Feststoffgemenge, wie beispielsweise von Erzen und Gangart, in einer wässrigen Aufschlämmung bzw. Suspension mit Hilfe von Gasbläschen aufgrund einer unterschiedlichen Oberflächenbenetzbarkeit der in der Suspension enthaltenen Partikel. Sie wird zur Aufbereitung von Bodenschätzen und bei der Verarbeitung von vorzugsweise mineralischen Stoffen mit einem niedrigen bis mittleren Gehalt an einer Nutzkomponente bzw. eines Wertstoffs verwendet, beispielsweise in Form von Nichteisenmetallen, Eisen, Metallen der seltenen Erden und/oder Edelmetallen sowie nichtmetallischen Bodenschätzen.

Die WO 2006/069995 A1 beschreibt eine pneumatische Flotationszelle mit einem Gehäuse, das eine Flotationskammer umfasst, mit mindestens einer Düse zur Zuführung von Suspension in die Flotationskammer, hier als Ejektoren bezeichnet, weiterhin mit mindestens einer Zuführanordnung zur Zuführung von Gas in die Flotationskammer, bei Verwendung von Luft Belüftungseinrichtungen oder Aeratoren genannt, sowie einem Sammelbehälter für ein bei der Flotation gebildetes Schaumprodukt.

Bei der pneumatischen Flotation wird generell eine mit Reagenzien versetzte Suspension aus Wasser und feinkörnigem Feststoff über mindestens eine Düse in eine Flotationskammer eingebracht. Die Reagenzien sollen bewirken, dass insbesondere die wertvollen, bevorzugt abzutrennenden Partikel bzw. Wertstoffpartikel in der Suspension hydrophob ausgebildet werden. Meist werden als Reagentien Xanthate eingesetzt, insbesondere um sulfidische Erzpartikel selektiv zu hydrophobisieren. Gleichzeitig mit der Suspension wird der mindestens einen Düse Gas, insbesondere Luft, zugeführt, das mit den hydrophoben Partikeln in der Suspension in Berührung kommt. Über die Düse bzw. den Ejektor wird demnach ein Dreiphasengemisch in die Flotationskammer eingedüst. Die hydrophoben Partikel haften an sich bildenden Gasbläschen an, so dass die Gasbläschen-Gebilde, auch Aeroflocken genannt, aufschwimmen und an der Oberfläche der Suspension das Schaumprodukt bilden. Das Schaumprodukt wird in einen Sammelbehälter ausgetragen und üblicherweise noch eingedickt.

Eine Düse zum Verdüsen eines Zwei- oder Dreiphasengemisches unterliegt in der Regel einer hohen mechanischen und abrasiven Beanspruchung. Bei hohen Durchströmungsgeschwindigkeiten des Zwei- oder Dreiphasengemisches durch die Düse oder bei kavitationsähnlichen Vorgängen wird der Werkstoff, aus dem die Düse gebildet ist, abgetragen und die geometrischen Abmessungen der Düse verändern sich. Dabei kann die Abtragung des Werkstoffs im Bereich der Innenwandung der Düse relativ gleichmäßig, aber auch lokal unterschiedlich auftreten.

Die veränderten geometrischen Abmessungen der Düse führen zu einer Änderung der Vermischung und Zerteilung der Phasen des Zwei- oder Dreiphasengemisches und dadurch in der Regel zu einer Verschlechterung im Bereich der sich anschließenden Prozesse. Bei einer Düse bzw. einem Ejektor zum Eindüsen eines Dreiphasengemisches umfassend Feststoffpartikel, Flüssigkeit und Gas in eine Flotationskammer führt die verschlechterte Mischung und Zerteilung der drei Phasen beispielsweise zu einer verringerten Leistung der Flotationszelle insgesamt.

Eine derartige Düse ist demnach ein Verschleißteil, das regelmäßig überprüft, gegebenenfalls überholt oder gegen eine fabrikneue Düse ausgetauscht werden muss. Je nach Einsatzgebiet der Düse ist eine derartige Inspektion oder Wartung in Zeitspannen von mehrmals täglich bis zu einmal jährlich durchzuführen. Beispielsweise bei einer Düse bzw. einem Ejektor zum Eindüsen eines Dreiphasengemisches umfassend Feststoffpartikel, Flüssigkeit und Gas in eine Flotationskammer wird eine Inspektion üblicherweise ein- bis zweimal jährlich durchgeführt. Dazu muss die Produktion gestoppt und jedes Verschleißteil der Flotationszelle, umfassend die Düsen bzw. Ejektoren, einzeln untersucht und beurteilt werden. Die Inspektion ist aufwendig und zeitintensiv. Alle gegebenenfalls als schadhaft identifizierten, auszutauschenden Verschleißteile müssen auf Lager sein, um einen schnellen Austausch zu gewährleisten und die Stillstandszeit der Flotationszelle nicht unnötig zu verlängern.

Es ist Aufgabe der Erfindung, ein dahingehend verbessertes System und Verfahren zur Überwachung eines Zustandes mindestens einer Düse zum Verdüsen eines Zwei- oder Dreiphasengemisches anzugeben.

Die Aufgabe wird für das System zur Überwachung eines Zustandes mindestens einer Düse zum Verdüsen eines Zwei- oder Dreiphasengemisches, dadurch gelöst, dass der Düse mindestens ein Körperschallsensor zur Erfassung eines Schallleistungspegelsignals im Bereich der Düse und weiterhin mindestens einen Gas- und/oder Flüssigkeitszähler zur Erfassung eines über die Düse geführten Volumenstroms an Gas und/oder Flüssigkeit zugeordnet ist.

Das erfindungsgemäße System ermöglicht eine permanente Überwachung des Verschleißzustandes der Düse, ohne dabei die Zufuhr an Zwei- oder Dreiphasengemisch zur Düse unterbrechen zu müssen oder die technische Anlage, in der die Düse betrieben wird, stilllegen zu müssen. Es hat sich nämlich gezeigt, dass der messbare Schallleistungspegel an einer fabrikneuen Düse oberhalb des Schallleistungspegels einer Düse liegt, die bereits geometrische Veränderungen aufgrund von Verschleiß aufweist. Weiterhin wurde festgestellt, dass der Verbrauch an Gas und/oder Flüssigkeit zur Bildung des Zwei- oder Dreiphasengemisches mit zunehmendem Verschleiß der Düse ansteigt. Es ist daher möglich, anhand des an der Düse erfassten Schallleistungspegelsignals und des gemessenen Volumenstroms an Gas- und/oder Flüssigkeit auf den vorliegenden Verschleiß der Düse zu schließen und eine Prognose abzugeben, nach welcher Betriebsdauer der Düse eine Wartung notwendig sein wird. Dies vereinfacht die Festlegung eines Termins für die Instandhaltung, bei dem tatsächlich eine Wartung erforderlich ist und ermöglicht eine genaue Planung für die Verschleißteil-Lagerhaltung und Verschleißteil-Nachbestellung.

Die Aufgabe wird für das erfindungsgemäße Verfahren zur Überwachung eines Zustandes mindestens einer Düse zum Verdüsen eines Zwei- oder Dreiphasengemisches dadurch gelöst, dass der Düse mindestens ein Körperschallsensor zur Erfassung eines Schallleistungspegelsignals im Bereich der Düse und weiterhin mindestens ein Gas- und/oder Flüssigkeitszähler zur Erfassung des über die Düse zugeführten Volumenstroms an Gas- oder Flüssigkeit zugeordnet wird, und dass anhand einer Auswertung der Schallleistungspegelsignale und der Volumenströme eine Festsetzung eines Wartungstermins für die mindestens eine Düse erfolgt.

Da es möglich ist, anhand des an der Düse erfassten Schallleistungspegelsignals und des gemessenen Volumenstroms auf den aktuell vorliegenden Verschleißzustand der Düse zu schließen, ist es auf einfache Weise auch möglich, eine Prognose abzugeben, nach welcher Betriebsdauer der Düse eine Wartung notwendig sein wird. Während üblicherweise ein starrer Turnus für Wartungstermine gewählt werden musste und die Wartung dann unabhängig davon durchgeführt wurde, ob der Verschleißzustand der Düse dies tatsächlich erforderte, kann die Abfolge an Wartungsterminen nun in Abhängigkeit des tatsächlichen Verschleißzustandes der jeweiligen Düse festgelegt werden. Dementsprechend kann der Wartungstermin bei einem Vorhandensein mehrerer Düsen dem Verschleißzustand derjenigen überwachten Düse angepasst werden, die bereits am stärksten verschlissen ist. Dadurch werden die Zeitspannen zwischen zwei Instandhaltungsterminen maximiert, Ausfälle von Düsen und unnötige Stillstandszeiten vermieden und die Kosten für die Lagerhaltung der Verschleißteile minimiert.

Der Körperschallsensor kann außen an der Düse angeordnet werden und ist damit selbst vor Verschleiß geschützt angeordnet und nahezu unbegrenzt verwendbar.

Einen weiteren Hinweis auf einen Verschleiß der Düse liefert auch der vor der Düse messbare Druck im Zwei- oder Dreistoffgemisch. Sobald hier gegenüber einem Ausgangswert für den Druck, der an einer neuen Düse messbar ist, ein merklicher Druckabfall festzustellen ist, liegt meist auch ein Verschleiß an der Düse vor. Daher ist es von Vorteil, wenn das System weiterhin mindestens einen, vor der Düse angeordneten Drucksensor zur Erfassung des Drucks im Zwei- oder Dreistoffgemisch aufweist. Mit diesem lassen sich Feststellungen zum Verschleißzustand der Düse, die mittels des mindestens einen Körperschallsensors und des mindestens einen Gas- oder Flüssigkeitszählers festgestellt wurden, weiter verifizieren.

Die Düse ist bei dem System bevorzugt derart angeordnet, dass eine Eindüsung des Zwei- oder Dreiphasengemisches in eine Kammer erfolgt. Bei der Kammer kann es sich in einer bevorzugten Ausgestaltung der Erfindung um eine Flotationskammer einer Flotationszelle handeln. Alternativ kann es sich bei der Kammer aber beispielsweise auch um eine Verbrennungskammer, insbesondere einer schmelzmetallurgischen Anlage oder eines Heizaggregats, handeln. Das System eignet sich aber natürlich auch für Düsen, die das Zwei- oder Dreiphasengemisch in die Umgebung, also in die Atmosphäre oder auch in einen Ozean, verdüsen.

Insbesondere handelt es sich bei der mindestens einen Düse des Systems aber um einen Ejektor zum Eindüsen eines Dreiphasengemisches umfassend Feststoffpartikel, Flüssigkeit und mindestens ein Gas in eine Kammer, wie eine Flotationskammer. Derartige Düsen sind einem besonders hohen Verschleiß unterworfen und eine unnötige oder verfrühte Wartung ist mit enormen Kosten und unnötigem Produktionsausfall verbunden.

In einer besonders bevorzugten Ausführungsform des Systems bzw. des Verfahrens ist weiterhin mindestens eine Recheneinheit vorhanden, welche mit dem mindestens einen Körperschallsensor und dem mindestens einen Gas- und/oder Flüssigkeitszähler, gegebenenfalls weiterhin dem mindestens einen Drucksensor, datentechnisch verbunden ist/wird. Die Recheneinheit ermöglicht eine automatische Erfassung und Speicherung der Daten sowie deren automatische Auswertung.

Die mindestens eine Recheneinheit ist vorzugsweise dazu eingerichtet, die von dem mindestens einen Körperschallsensor erfassten Schallleistungspegelsignale und von dem mindestens einen Gas- und/oder Flüssigkeitszähler erfassten Volumenstrom an Gas- und/oder Flüssigkeit, gegebenenfalls weiterhin einen von dem mindestens einen Drucksensor erfassten Druck vor der Düse, über einen Zeitraum t zu speichern und miteinander zeitlich zu korrelieren. So sind der Verlauf des Schallleistungspegelsignals und der Volumenstrom verfolgbar.

Bevorzugt umfasst die mindestens eine Recheneinheit eine Anzeigeeinheit, welche eingerichtet ist, die korrelierten Signale für das Wartungspersonal optisch auszugeben.

Die Recheneinheit ist weiterhin vorzugsweise dazu eingerichtet, aus dem Volumenstrom an Gas- und/oder Flüssigkeit, sofern erforderlich, einen mittleren Volumenstrom an Gas- und/oder Flüssigkeit zu errechnen und aus den Schallleistungspegelsignalen ein mittleres Schallleistungspegelsignal zu errechnen, und bei einer Überschreitung eines ersten Schwellwerts für den Volumenstrom oder mittleren Volumenstrom und/oder bei einer Unterschreitung eines zweiten Schwellwerts für das mittlere Schallleistungspegelsignal ein Warnsignal zu erzeugen, welches anzeigt, dass eine Wartung oder ein Austausch der Düse durchzuführen ist. Das Warnsignal zeigt dabei den prognostizierten Wartungstermin auf. Dabei kann die Vorwarnzeit für die Wartung bzw. die Zeitspanne zwischen auftreten des Warnsignals und tatsächlichem Wartungstermin an die erforderlichen Bestell- und Lieferzeiten für das benötigte Verschleißteil angepasst werden.

Der erste Schwellwert wird dabei insbesondere derart gewählt, dass dieser 20 % über einem, an der fabrikneuen Düse gemessenen Volumenstrom oder mittleren Volumenstrom an Gas- und/oder Flüssigkeit liegt.

Der zweite Schwellwert wird bevorzugt derart gewählt, dass dieser 50 % unter dem an einer fabrikneuen Düse gemessenen mittleren Schallleistungspegelsignal liegt.

Die Recheneinheit ist bevorzugt weiterhin eingerichtet, optional aus dem erfassten Druck einen mittleren Druck vor der Düse zu errechnen, und bei einer Unterschreitung eines weiteren Schwellwerts für den Druck oder den mittleren Druck ein weiteres Warnsignal zu erzeugen. Liegen sowohl das Warnsignal sowie das weitere Warnsignal vor, ist dies als Bestätigung für einen vorliegenden Verschleiß an der Düse aufzufassen.

Das erfindungsgemäße System und das erfindungsgemäße Verfahren sind für die Überwachung des Zustands jeglicher Düsen zum Verdüsen eines Zwei- oder Dreiphasengemisches geeignet. Insbesondere ist eine Anwendung zur Überwachung von Ejektoren zum Eindüsen von Zwei- oder Dreiphasengemischen, wie Suspensionen oder mit Gas versetzten Suspensionen, in Flotationskammern, oder von Düsen zum Eindüsen von Zweiphasengemischen umfassend Gas und Feststoffpartikel oder Gas und Flüssigkeiten in eine Verbrennungskammer vorgesehen. Jedoch können das erfindungsgemäße System und das Verfahren auch für andere Anwendungsbereiche, beispielsweise in der Abwassertechnik, der Papierherstellung oder der chemischen Industrie, gewinnbringend eingesetzt werden.

Die Figuren 1 bis 4 sollen verschiedene Ausführungsformen des Systems und des Verfahrens beispielhaft erläutern. So zeigt
- FIG 1: ein System umfassend eine Recheneinheit;
- FIG 2: eine Auswertung der von einem erfindungsgemäßen System bereitgestellten Signale;
- FIG 3: ein System mit einer Düse für eine Flotationszelle;
- FIG 4: ein System mit einer Düse für einen Elektrolichtbogenofen.

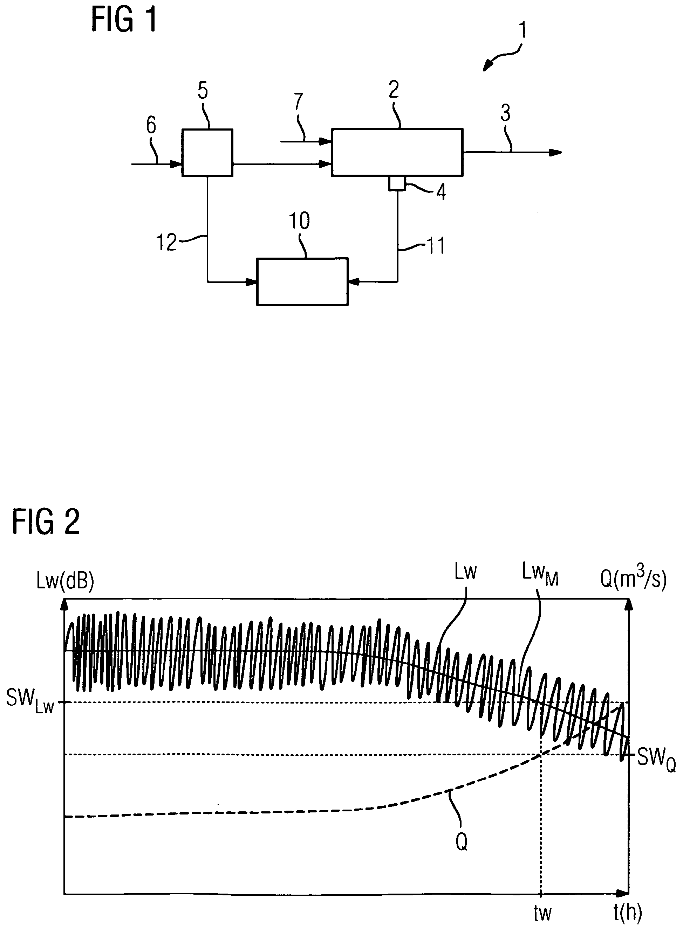

FIG 1 zeigt ein System 1 zur Überwachung eines Zustandes einer Düse 2, hier zum Verdüsen eines Dreiphasengemisches 3 umfassend eine Suspension 7 aus Wasser und Erzmineralpartikeln und ein Gas 6, hier in Form von Luft. Der Düse 2 ist ein Körperschallsensor 4 zur Erfassung eines Schallleistungspegelsignals im Bereich der Düse 2 und weiterhin mindestens ein Gaszähler 5 zur Erfassung des über die Düse 2 geführten Volumenstroms an Gas 6 zugeordnet. Weiterhin umfasst das System 1 hier eine Recheneinheit 10, die über Datenübertragungsleitungen 11, 12 mit dem Körperschallsensor 4 und dem Gaszähler 5 verbunden ist. Anstelle der Datenübertragungsleitungen 11, 12 kann auch eine kabellose Datenverbindung, beispielsweise per Funk, zwischen der Recheneinheit 10 und dem Körperschallsensor 4 und dem Gaszähler 5 vorhanden sein.

Die von dem Körperschallsensor 4 erfassten Schallleistungspegelsignale Lw (vergleiche FIG 2) und das vom Gaszähler 5 erfasste Signal für den Volumenstrom Q an Gas 6 werden an die Recheneinheit 10 übermittelt und ausgewertet. Anstelle der Recheneinheit 10 können die Signale für den Schallleistungspegel Lw und den Volumenstrom Q alternativ am Körperschallsensor 4 und Gaszähler 5 manuell aufgenommen und die Ergebnisse entsprechend manuell ausgewertet werden.

FIG 2 zeigt beispielhaft eine Auswertung der von dem System 1 bereitgestellten Signale. Auf der Y-Achse sind der mittels des Körperschallsensors 4 erfasste Schallleistungspegel Lw in dB und der mittels eines Gaszählers 5 erfasste Volumenstrom Q an Gas in m³/s aufgetragen. Auf der x-Achse wird die Betriebsdauer t der überwachten Düse 2 - je nach erwartetem Verschleißverhalten - in Stunden, Tagen, Wochen oder auch Jahren aufgetragen. Hier ist beispielhaft eine Darstellung der Betriebsdauer t in Stunden gewählt. Anhand einer Auswertung der Schallleistungspegelsignale Lw und des Volumenstroms Q erfolgt eine Festsetzung eines Wartungstermins tw für die Düse 2.

Die Recheneinheit 10 ist gegebenenfalls, sofern bei stark schwankendem Signal erforderlich, eingerichtet, aus dem Volumenstrom an Gas- und/oder Flüssigkeit, einen mittleren Volumenstrom an Gas- und/oder Flüssigkeit zu errechnen. Die Recheneinheit 10 ist weiterhin eingerichtet, aus den Schallleistungspegelsignalen Lw ein mittleres Schallleistungspegelsignal Lw_{M} zu errechnen, und bei einer Überschreitung eines ersten Schwellwerts SW_{Q} für den Volumenstrom Q oder mittleren Volumenstrom und/oder bei einer Unterschreitung eines zweiten Schwellwerts SW_{Lw} für das mittlere Schallleistungspegelsignal L_{wM} ein Warnsignal zu erzeugen, welches anzeigt, dass eine Wartung oder ein Austausch der Düse 2 zum Termin tw durchzuführen ist.

Das System 1 kann weiterhin einen hier nicht im Detail dargestellten Drucksensor aufweisen, der einen Druck vor der Düse bestimmt und optional datentechnisch mit der Recheneinheit 10 verbunden ist. Der gemessene Druck bzw. ein Ausmaß eines Druckabfall gegenüber dem gemessenen Druck an einer fabrikneuen Düse kann als ein zusätzliches Indiz ausgewertet werden, dass ein Verschleiß der Düse eingetreten ist.

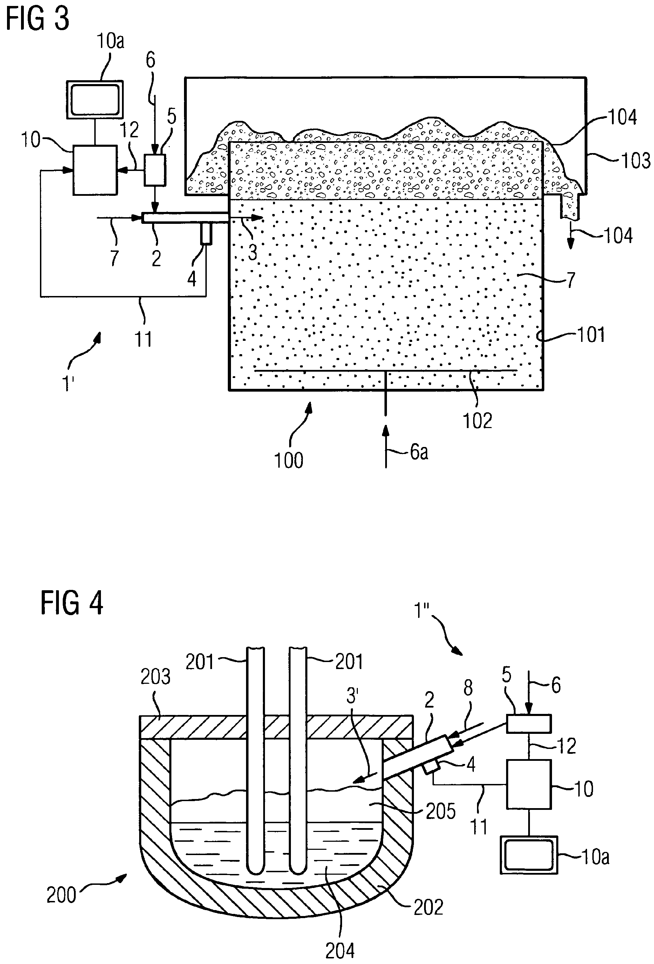

FIG 3 zeigt ein System 1' mit einer Düse 2, die als Ejektor einer Flotationszelle 100 betrieben wird. Gleiche Bezugszeichen wir in Figur 1 kennzeichnen gleiche Elemente. Das System 1' weist eine Recheneinheit 10 auf, die eine Anzeigeeinheit 10a umfasst. Diese ist eingerichtet, die korrelierten Signale für den Volumenstrom Q und den Schallleistungspegel Lw, Lw_{M} optisch auszugeben, beispielsweise in einer grafischen Darstellung gemäß FIG 2.

Die Flotationszelle 100 umfasst eine im Querschnitt dargestellte Flotationskammer 101, in welche mittels der Düse 2 ein Dreiphasengemisch 3 umfassend eine Suspension 7 enthaltend Feststoffpartikel aus Erzmineral und Wasser sowie ein Gas 6 in Form von Luft eingebracht wird.

In der Flotationskammer 101 befindet sich bereits Suspension 7, welche mittels einer schematisch dargestellten Gaszuführungsanordnung 102 mit weiterem Gas 6a in Form von Luft begast wird. Im oberen Bereich der Flotationskammer 101 bildet sich auf der Oberfläche der Suspension 7 ein Schaumprodukt 104 umfassend Gasbläschen und daran anhaftende Wertstoffpartikel aus dem Erzmineral, das über eine ebenfalls im Querschnitt dargestellte Schaumsammelrinne 103 abgeführt wird. Mittels des Systems 1' kann ein optimaler Wartungstermin für die Düse 2 ermittelt und die Wartung geplant zu diesem Termin durchgeführt werden.

FIG 4 zeigt ein System 1" mit einer Düse 2 für einen Elektrolichtbogenofen 200. Gleiche Bezugszeichen wir in Figur 1 kennzeichnen gleiche Elemente. Das System 1" weist eine Recheneinheit 10 auf, die eine Anzeigeeinheit 10a umfasst. Diese ist eingerichtet, die korrelierten Signale für den Volumenstrom Q und den Schallleistungspegel Lw, Lw_{M} optisch auszugeben, beispielsweise in einer grafischen Darstellung gemäß FIG 2.

Der schematisch dargestellte Elektrolichtbogenofen 200 umfasst ein im Querschnitt dargestelltes Ofengefäß 202 mit Ofendeckel 203, in welches mittels der Düse 2 ein Zweiphasengemisch 3' umfassend Feststoffpartikel 8, wie z.B. Kohlenstoffpartikel, sowie ein Gas 6 in Form von Luft eingebracht wird. Alternativ kann die Düse 2 als Brenner fungieren, über welchen ein Zweistoffgemisch aus Schweröl und Sauerstoff gebildet, verdüst und gezündet wird.

Im Ofengefäß 202 befindet sich eine Metallschmelze 204, auf der sich eine Schicht aus Schlacke 205 gebildet hat. Der Ofenraum oberhalb der Schlacke bildet einen Verbrennungsraum der metallurgischen Anlage. Durch den Ofendeckel 203 sind zur Erzeugung eines Lichtbogens Elektroden 201 aus Graphit geführt.

Mittels des Systems 1" kann ein optimaler Wartungstermin für die Düse 2 ermittelt und die Wartung geplant zu diesem Termin durchgeführt werden.

Die obigen Ausführungsbeispiele umfassen selbstverständlich nicht alle Ausführungsformen der Erfindung oder sämtliche mögliche Anwendungsfälle. So ist auch eine Überwachung gleichzeitig mehrerer Düsen möglich, in denen gleiche oder unterschiedliche Zwei- oder Dreiphasengemische verdüst werden. Auch sind diverse weitere Anwendungsgebiete, beispielsweise in der Abwassertechnik, möglich. Weiterhin kann bei Zweistoffgemischen in Form von Suspensionen ein Flüssigkeitszähler vorhanden sein oder bei Zweistoffgemischen umfassend Gas und Flüssigkeit ein Gas- sowie ein Flüssigkeitszähler vorhanden sein.

## Patentansprüche

1. System (1, 1', 1") zur Überwachung eines Zustandes mindestens einer Düse (2) zum Verdüsen eines Zwei- oder Dreiphasengemisches (3, 3'), **dadurch gekennzeichnet, dass** der Düse (2) mindestens ein Körperschallsensor (4) zur Erfassung eines Schallleistungspegelsignals (Lw) im Bereich der Düse (2) und weiterhin mindestens ein Gas- und/oder Flüssigkeitszähler (5) zur Erfassung eines über die Düse (2) geführten Volumenstroms (Q) an Gas (6) und/oder Flüssigkeit zugeordnet ist.

2. System nach Anspruch 1, **dadurch gekennzeichnet, dass** vor der Düse (2) mindestens ein Drucksensor zur Erfassung eines Drucks im Zwei- oder Dreiphasengemisches (3, 3') angeordnet ist.

3. System nach Anspruch 1 oder Anspruch 2, **dadurch gekennzeichnet, dass** die Düse (2) derart angeordnet ist, dass eine Eindüsung in eine Kammer erfolgt.

4. System nach Anspruch 3, **dadurch gekennzeichnet, dass** es sich bei der Kammer um eine Flotationskammer (101) einer Flotationszelle (100) handelt.

5. System nach Anspruch 4, **dadurch gekennzeichnet, dass** es sich bei der mindestens einen Düse (2) um einen Ejektor zum Eindüsen eines Dreiphasengemisches (3) umfassend Feststoffpartikel (8), Flüssigkeit und mindestens ein Gas (6) in die Kammer handelt.

6. System nach Anspruch 3, **dadurch gekennzeichnet, dass** es sich bei der Kammer um eine Verbrennungskammer, insbesondere einer schmelzmetallurgischen Anlage oder eines Heizaggregats, handelt.

7. System nach einem der Ansprüche 1 bis 6, **dadurch gekennzeichnet, dass** weiterhin mindestens eine Recheneinheit (10) vorhanden ist, welche mit dem mindestens einen Körperschallsensor (4) und dem mindestens einen Gas- und/oder Flüssigkeitszähler (5), gegebenenfalls weiterhin dem mindestens einen Drucksensor, datentechnisch verbunden ist.

8. System nach Anspruch 7, **dadurch gekennzeichnet, dass** die mindestens eine Recheneinheit (10) eingerichtet ist, die von dem mindestens einen Körperschallsensor (4) erfassten Schallleistungspegelsignale (Lw) und den von dem mindestens einen Gas- und/oder Flüssigkeitszähler (5) erfassten Volumenstrom (Q) an Gas- und/oder Flüssigkeit, gegebenenfalls weiterhin einen von dem mindestens einen Drucksensor erfassten Druck vor der Düse (2), über einen Zeitraum zu speichern und miteinander zeitlich zu korrelieren.

9. System nach Anspruch 8, **dadurch gekennzeichnet, dass** die mindestens eine Recheneinheit (10) eine Anzeigeeinheit (10a) umfasst, welche eingerichtet ist, die korrelierten Signale optisch auszugeben.

10. System nach einem der Ansprüche 7 bis 9, **dadurch gekennzeichnet, dass** die Recheneinheit (10) weiterhin eingerichtet ist, aus dem Volumenstrom (Q) an Gas- und/oder Flüssigkeit optional einen mittleren Volumenstrom an Gas- und/oder Flüssigkeit zu errechnen und aus den Schallleistungspegelsignalen (Lw) ein mittleres Schallleistungspegelsignal (Lw_{M}) zu errechnen, und bei einer Überschreitung eines ersten Schwellwerts (SW_{Q}) für den Volumenstrom (Q) oder mittleren Volumenstrom und/oder bei einer Unterschreitung eines zweiten Schwellwerts (SW_{Lw}) für das mittlere Schallleistungspegelsignal (SW_{LwM}) ein Warnsignal zu erzeugen, welches anzeigt, dass eine Wartung oder ein Austausch der Düse (2) durchzuführen ist.

11. System nach Anspruch 10, **dadurch gekennzeichnet, dass** die Recheneinheit (10) weiterhin eingerichtet ist, optional aus dem erfassten Druck einen mittleren Druck vor der Düse (2) zu errechnen, und bei einer Unterschreitung eines weiteren Schwellwerts für den Druck oder den mittleren Druck ein weiteres Warnsignal zu erzeugen.

12. Verfahren zur Überwachung eines Zustandes mindestens einer Düse (2) zum Verdüsen eines Zwei- oder Dreiphasengemisches (3, 3'), **dadurch gekennzeichnet, dass** der Düse (2) mindestens ein Körperschallsensor (4) zur Erfassung eines Schallleistungspegelsignals (Lw) im Bereich der Düse (2) und weiterhin mindestens ein Gas- und/oder Flüssigkeitszähler (5) zur Erfassung des über die Düse (2) geführten Volumenstroms (Q) an Gas- oder Flüssigkeit zugeordnet wird, und dass anhand einer Auswertung der Schallleistungspegelsignale (Lw) und des Volumenstroms (Q) eine Festsetzung eines Wartungstermins (tw) für die mindestens eine Düse (2) erfolgt.

13. Verfahren nach Anspruch 12, **dadurch gekennzeichnet, dass** weiterhin mittels mindestens eines vor der Düse (2) angeordneten Drucksensors ein Druck im Zwei- oder Dreistoffgemisch (3, 3') erfasst wird.

14. Verfahren nach Anspruch 12 oder 13, **dadurch gekennzeichnet, dass** weiterhin mindestens eine Recheneinheit (10) mit dem mindestens einen Körperschallsensor (4) und dem mindestens einen Gas- und/oder Flüssigkeitszähler (5), gegebenenfalls weiterhin dem mindestens einen Drucksensor, datentechnisch verbunden wird und dass die von dem mindestens einen Körperschallsensor (4) erfassten Schallleistungspegelsignale (Lw) und von dem mindestens einen Gas- und/oder Flüssigkeitszähler (5) erfassten Volumenströme (Q), gegebenenfalls weiterhin der von dem mindestens einen Drucksensor erfasste Druck, über einen Zeitraum gespeichert und miteinander zeitlich korreliert werden.

15. Verfahren nach Anspruch 14, **dadurch gekennzeichnet, dass** die korrelierten Signale über eine Anzeigeeinheit (10a) der mindestens einen Recheneinheit (10) optisch ausgegeben werden.

16. Verfahren nach Anspruch 14 oder Anspruch 15, **dadurch gekennzeichnet, dass** mittels der mindestens einen Recheneinheit (10) aus den Schallleistungspegelsignalen (Lw) ein mittleres Schallleistungspegelsignal (Lw_{M}) errechnet wird und aus dem Volumenstrom (Q) optional ein mittlerer Volumenstrom errechnet wird, und dass bei einer Überschreitung eines ersten Schwellwerts (SW_{Q}) für den Volumenstrom (Q) oder mittleren Volumenstrom und/oder bei einer Unterschreitung eines zweiten Schwellwerts (SW_{Lw}) für das mittlere Schallleistungspegelsignal (Lw_{M}) ein Warnsignal erzeugt wird, welches den Wartungstermin (tw) aufzeigt.

17. Verfahren nach Anspruch 16, **dadurch gekennzeichnet, dass** der erste Schwellwert (SW_{Q}) derart gewählt wird, dass dieser 20 % über einem, an der fabrikneuen Düse gemessenen Volumenstrom (Q) oder mittleren Volumenstrom liegt.

18. Verfahren nach einem der Ansprüche 16 oder 17, **dadurch gekennzeichnet, dass** der zweite Schwellwert (SW_{Lw}) derart gewählt wird, dass dieser 50 % unter dem an einer fabrikneuen Düse gemessenen mittleren Schallleistungspegelsignal (Lw_{M}) liegt.

19. Verfahren nach einem der Ansprüche 16 bis 18, **dadurch gekennzeichnet, dass** mittels der mindestens einen Recheneinheit (10) weiterhin optional aus dem erfassten Druck ein mittlerer Druck vor der Düse (2) errechnet wird, und dass bei einer Unterschreitung eines weiteren Schwellwerts für den Druck oder den mittleren Druck ein weiteres Warnsignal erzeugt wird.

## Claims

1. System (1, 1', 1") for monitoring a condition of at least one nozzle (2) for spraying a two-phase or three-phase mixture (3, 3'), **characterised in that** the nozzle (2) is assigned at least one structure-borne sound sensor (4) for detecting a sound power level signal (Lw) in the region of the nozzle (2) and also at least one gas and/or liquid meter (5) for detecting a volumetric flow (Q) of gas (6) and/or liquid passed by way of the nozzle (2).

2. System according to claim 1, **characterised in that** at least one pressure sensor for detecting a pressure in the two-phase or three-phase mixture (3, 3') is disposed upstream of the nozzle (2).

3. System according to claim 1 or claim 2, **characterised in that** the nozzle (2) is disposed in such a manner that it sprays into a chamber.

4. System according to claim 3, **characterised in that** the chamber is a flotation chamber (101) of a flotation cell (100).

5. System according to claim 4, **characterised in that** the at least one nozzle (2) is an ejector for spraying a three-phase mixture (3) comprising solid particles (8), liquid and at least one gas (6) into the chamber.

6. System according to claim 3, **characterised in that** the chamber is a combustion chamber, in particular in a smelting plant or a heating unit.

7. System according to one of claims 1 to 6, **characterised in that** at least one computation unit (10) is also present, which is connected for data purposes to the at least one structure-borne sound sensor (4) and the at least one gas and/or liquid meter (5), also the at least one pressure sensor where applicable.

8. System according to claim 7, **characterised in that** the at least one computation unit (10) is set up to store and correlate over time for a time period the sound power level signals (Lw) detected by the at least one structure-borne sound sensor (4) and the volumetric flow (Q) of gas and/or liquid detected by the at least one gas and/or liquid meter (5), also a pressure upstream of the nozzle (2) detected by the at least one pressure sensor where applicable.

9. System according to claim 8, **characterised in that** the at least one computation unit (10) has a display unit (10a), which is set up to output the correlated signals visually.

10. System according to one of claims 7 to 9, **characterised in that** the computation unit (10) is also set up optionally to calculate a mean volumetric flow of gas and/or liquid from the volumetric flow (Q) of gas and/or liquid and to calculate a mean sound power level signal (Lw_{M}) from the sound power level signals (Lw) and, if the resulting value is above a first threshold value (SW_{Q}) for the volumetric flow (Q) or mean volumetric flow and/or below a second threshold value (SW_{Lw}) for the mean sound power level signal (SW_{LwM}), to generate a warning signal, which indicates that maintenance should be performed or the nozzle (2) should be replaced.

11. System according to claim 10, **characterised in that** the computation unit (10) is also set up optionally to calculate a mean pressure upstream of the nozzle (2) from the detected pressure and to generate a further warning signal if the resulting value is below a further threshold value for the pressure or the mean pressure.

12. Method for monitoring a condition of at least one nozzle (2) for spraying a two-phase or three-phase mixture (3, 3'), **characterised in that** the nozzle (2) is assigned at least one structure-borne sound sensor (4) for detecting a sound power level signal (Lw) in the region of the nozzle (2) and also at least one gas and/or liquid meter (5) for detecting the volumetric flow (Q) of gas and/or liquid carried by way of the nozzle (2) and **in that** a maintenance appointment (tw) is set for the at least one nozzle (2) based on an evaluation of the sound power level signals (Lw) and the volumetric flow (Q).

13. Method according to claim 12, **characterised in that** a pressure in the two-phase or three-phase mixture (3, 3') is also detected by means of at least one pressure sensor disposed upstream of the nozzle (2).

14. Method according to claim 12 or 13, **characterised in that** at least one computation unit (10) is connected for data purposes to the at least one structure-borne sound sensor (4) and the at least one gas and/or liquid meter (5), also the at least one pressure sensor where applicable, and **in that** the sound power level signals (Lw) detected by the at least one structure-borne sound sensor (4) and the volumetric flows (Q) detected by the at least one gas and/or liquid meter (5), also the pressure detected by the at least one pressure sensor where applicable, are stored and correlated over time for a time period.

15. Method according to claim 14, **characterised in that** the correlated signals are output visually by way of a display unit (10a) of the at least one computation unit (10).

16. Method according to claim 14 or claim 15, **characterised in that** a mean sound power level signal (Lw) is calculated from the sound power level signals (Lw_{M}) by means of the at least one computation unit (10) and optionally a mean volumetric flow is calculated from the volumetric flow (Q) and, if the resulting value is above a first threshold value (SW_{Q}) for the volumetric flow (Q) or mean volumetric flow and/or below a second threshold value (SW_{Lw}) for the mean sound power level signal (Lw_{M}), a warning signal is generated, which indicates the maintenance appointment (tw).

17. Method according to claim 16, **characterised in that** the first threshold value (SW_{Q}) is selected in such a manner that it is 20% above a volumetric flow (Q) measured at the newly manufactured nozzle or a mean volumetric flow.

18. Method according to one of claims 16 or 17, **characterised in that** the second threshold value (SW_{Lw}) is selected in such a manner that it is 50% below the mean sound power level signal (Lw_{M}) measured at a newly manufactured nozzle.

19. Method according to one of claims 16 to 18, **characterised in that** a mean pressure upstream of the nozzle (2) is optionally calculated from the detected pressure by means of the at least one computation unit (10) and a further warning signal is generated, if the resulting value is below a further threshold value for the pressure or the mean pressure.

## Revendications

1. Système (1, 1', 1") pour la surveillance d'un état d'au moins une buse (2) pour l'injection d'un mélange di- ou triphasique (3, 3'), **caractérisé en ce qu'**au moins un capteur de bruit de structure (4) est associé à la buse (2) pour la détection d'un signal de niveau de puissance sonore (Lw) dans la région de la buse (2) et au moins un compteur de gaz et/ou de liquide (5) est également associé à la buse (2) pour la détection d'un courant volumique (Q) de gaz (6) et/ou de liquide conduit à travers la buse (2).

2. Système selon la revendication 1, **caractérisé en ce qu'**au moins un capteur de pression est agencé en amont de la buse (2) pour la détection d'une pression dans le mélange di- ou triphasique (3, 3').

3. Système selon la revendication 1 ou la revendication 2, **caractérisé en ce que** la buse (2) est agencée de telle manière qu'il se produise une injection dans une chambre.

4. Système selon la revendication 3, **caractérisé en ce que** la chambre est une chambre de flottation (101) d'une cellule de flottation (100).

5. Système selon la revendication 4, **caractérisé en ce que** ladite au moins une buse (2) est un éjecteur pour l'injection d'un mélange triphasique (3) comprenant des particules solides (8), du liquide et au moins un gaz (6) dans la chambre.

6. Système selon la revendication 3, **caractérisé en ce que** la chambre est une chambre de combustion, en particulier d'une installation de métallurgie par fusion ou d'un groupe de chauffage.

7. Système selon l'une quelconque des revendications 1 à 6, **caractérisé en ce qu'**il se trouve en outre au moins une unité de calcul (10), qui est en liaison de transmission de données avec ledit au moins un capteur de bruit de structure (4) et ledit au moins un compteur de gaz et/ou de liquide (5), éventuellement aussi avec ledit au moins un capteur de pression.

8. Système selon la revendication 7, **caractérisé en ce que** ladite au moins une unité de calcul (10) est conçue pour mémoriser sur un laps de temps et pour corréler temporellement entre eux les signaux de niveau de puissance sonore (Lw) détectés par ledit au moins un capteur de bruit de structure (4) et le courant volumique (Q) de gaz et/ou de liquide détecté par ledit au moins un compteur de gaz et/ou de liquide (5), éventuellement aussi une pression en amont de la buse (2) détectée par ledit au moins un capteur de pression.

9. Système selon la revendication 8, **caractérisé en ce que** ladite au moins une unité de calcul (10) comprend une unité d'affichage (10a) qui est conçue pour présenter optiquement les signaux corrélés.

10. Système selon l'une quelconque des revendications 7 à 9, **caractérisé en ce que** l'unité de calcul (10) est conçue en outre pour calculer en option un courant volumique moyen de gaz et/ou de liquide à partir du courant volumique (Q) de gaz et/ou de liquide et pour calculer un signal de niveau de puissance sonore moyen (Lw_{M}) à partir des signaux de niveau de puissance sonore (Lw) et, en cas de franchissement à la hausse d'un premier seuil (SW_{Q}) pour le courant volumique (Q) ou le courant volumique moyen et/ou en cas de franchissement à la baisse d'un deuxième seuil (SW_{Lw}) pour le signal de niveau de puissance sonore moyen (SW_{LwM}), pour produire un signal d'avertissement qui indique qu'il faut procéder à un entretien ou à un remplacement de la buse (2).

11. Système selon la revendication 10, **caractérisé en ce que** l'unité de calcul (10) est en outre conçue pour calculer en option une pression moyenne en amont de la buse (2) à partir de la pression détectée et, en cas de franchissement à la baisse d'un autre seuil pour la pression ou la pression moyenne, pour produire un autre signal d'avertissement.

12. Procédé pour la surveillance d'un état d'au moins une buse (2) pour injecter un mélange di- ou triphasique (3, 3'), **caractérisé en ce que** l'on associe à la buse (2) au moins un capteur de bruit de structure (4) pour la détection d'un signal de niveau de puissance sonore (Lw) dans la région de la buse (2) et, en outre, au moins un compteur de gaz et/ou de liquide (5) pour la détection d'un courant volumique (Q) de gaz et/ou de liquide conduit à travers la buse (2), et **en ce que** l'on procède, à l'aide d'une analyse des signaux de niveau de puissance sonore (Lw) et du courant volumique (Q), à la fixation d'un délai d'entretien (tw) pour ladite au moins une buse (2).

13. Procédé selon la revendication 12, **caractérisé en ce que** l'on détecte en outre une pression dans le mélange di- ou triphasique (3, 3') au moyen d'au moins un capteur de pression agencé en amont de la buse (2).

14. Procédé selon la revendication 12 ou 13, **caractérisé en ce que** l'on relie en outre par une liaison de transmission de données au moins une unité de calcul (10) audit au moins un capteur de bruit de structure (4) et audit au moins un compteur de gaz et/ou de liquide (5), éventuellement aussi audit au moins un capteur de pression et **en ce que** l'on mémorise sur un laps de temps et on corrèle temporellement entre eux les signaux de niveau de puissance sonore (Lw) détectés par ledit au moins un capteur de bruit de structure (4) et les courants volumiques (Q) détectés par ledit au moins un compteur de gaz et/ou de liquide (5) et, éventuellement, aussi la pression détectée par ledit au moins un capteur de pression.

15. Procédé selon la revendication 14, **caractérisé en ce que** l'on présente optiquement les signaux corrélés au moyen d'une unité d'affichage (10a) de ladite au moins une unité de calcul (10).

16. Procédé selon la revendication 14 ou la revendication 15, **caractérisé en ce que** l'on calcule au moyen de ladite au moins une unité de calcul (10) un signal de niveau de puissance sonore moyen (Lw_{M}) à partir des signaux de niveau de puissance (Lw) et, en option, un courant volumique moyen à partir du courant volumique (Q) et **en ce qu'**en cas de franchissement à la hausse d'un premier seuil (SW_{Q}) pour le courant volumique (Q) ou pour le courant volumique moyen et/ou en cas de franchissement à la baisse d'un deuxième seuil (SW_{Lw}) pour le signal de niveau de puissance sonore moyen (Lw_{M}), on produit un signal d'avertissement qui affiche le délai d'entretien (tw).

17. Procédé selon la revendication 16, **caractérisé en ce que** l'on choisit le premier seuil (SW_{Q}) de telle manière que celui-ci se situe 20 % au-dessus d'un courant volumique (Q) ou d'un courant volumique moyen mesuré sur la buse toute neuve.

18. Procédé selon l'une des revendications 16 ou 17, **caractérisé en ce que** l'on choisit le deuxième seuil (SW_{Lw}) de telle manière que celui-ci se situe 50 % en dessous du signal de niveau de puissance sonore moyen (Lw_{M}) mesuré sur une buse toute neuve.

19. Procédé selon l'une quelconque des revendications 16 à 18, **caractérisé en ce que** l'on calcule en outre en option, au moyen de ladite au moins une unité de calcul (10), une pression moyenne en amont de la buse (2) à partir de la pression détectée et **en ce que** l'on produit un autre signal d'avertissement en cas de franchissement à la baisse d'un autre seuil pour la pression ou la pression moyenne.
